# EUROPEAN PATENT APPLICATION

(11) **EP 3 603 969 A1**
(43) Date of publication of application: **05.02.2020**
(21) Application number: 18770287.3
(22) Date of filing: 05.03.2018
(51) Int. Cl.: B32B 33/00, B32B 27/00, B65D 30/02, B65D 65/40

(54) **STRUCTURE PROVIDED WITH SURFACE HAVING OIL FILM FORMING CAPABILITY, AND METHOD FOR FORMING OIL FILM**

(30) Priority: 22.03.2017 JP 2017055583
(71) Applicant: Toyo Seikan Co., Ltd., Tokyo 141-8640 (JP)
(72) Inventor: AKUTSU, Yosuke, Yokohama-shi Kanagawa 230-0001 (JP); MIYAZAKI, Tomoyuki, Yokohama-shi Kanagawa 230-0001 (JP); MAEJIMA, Sarasa, Yokohama-shi Kanagawa 230-0001 (JP); NYUU, Keisuke, Yokohama-shi Kanagawa 230-0001 (JP)
(74) Representative: J A Kemp LLP
(86) International application number: PCT/JP2018/008260
(87) International publication number: WO 2018/173713

(57) **Abstract**

A structure of the present invention is characterized in that a water-soluble organic material solid layer (3) including an oil and/or a fat is provided on a surface of a substrate (1).

## Description

### Technical Field:

The present invention relates to a structure whose surface has oil film formability. In particular, the present invention relates to a structure to be used preferably as a film. The present invention further relates to a method for forming an oil film on a surface of the structure.

### Background Art:

A container to contain a liquid content is required to have a discharge ability to discharge the content irrespective of the material of the container. In a case of a container for containing a less viscous liquid like water, demand for the discharge ability is little. However, the discharge ability is highly required for a container to contain highly-viscous substances like mayonnaise and ketchup, if the container is made of plastic or glass. That is, the content cannot be discharged quickly even by inclining the container, and it may be impossible to use up the content adhering to the container wall. As a result, a considerable amount of content may not be discharged but remain particularly on the bottom portion of the container.

In various techniques that have been proposed recently, an oil film is formed on the surface of a formed body like a container to improve the lubricity with respect to a viscous substance (see Patent documents 1 and 2, for instance).

Such techniques are currently attracting attention since they can improve remarkably the lubricity in comparison with a technique of adding an additive like a lubricant to a synthetic resin to form the formed body surface.

However, the aforementioned technique of forming an oil film on the substrate surface to modify the surface property has a disadvantage. Namely, the technique is difficult to apply to a film.

In other words, the oil film is formed on the film surface by spray-coating the oil or fat on the film surface. In an industrial implement, the oil film is formed on a long film. The oil film is formed on the surface of the long film when the long film is wound by a roller, so that the long film with the oil film formed on the surface is wound into a roll. In application, the long film with the oil film is wound out and cut to have a suitable size for the application.

As a result, in a case of industrially producing a film with an oil film formed thereon, the long film will be wound into the roll, and thus, the film rear surface is positioned on the surface of the oil film. This will cause a problem that needs to be solved, i.e., the oil film sets off.

### Prior Art Documents:

### Patent Documents:

[Patent Document 1] WO2012/100099
[Patent Document 2] WO2013/022467

### Summary of the Invention:

### Problems to be solved by the invention:

Therefore, an object of the present invention is to provide a structure that has no oil film during the formation process but is provided with an oil film in its application, thereby effectively preventing offset of the oil film during transportation and storage after the formation.

Another object of the present invention is to provide a method of forming an oil film on the surface of the structure.

### Means for solving the problems:

The present invention provides a structure including a water-soluble organic material solid layer that includes an oil or a fat and that is provided on a surface of a substrate.

It is preferable in the structure of the present invention that:
(1) the substrate includes a film; and
(2) the water-soluble organic material is selected from a cellulose polymer, polysaccharide, dextrin and cyclodextrin, and the oil is an edible oil.

Further the present invention provides an oil film formation method, and the method includes a step of bringing a hydrous substance into contact with the water-soluble organic material solid layer on the surface of the structure so as to elute the oil or fat from the water-soluble organic material solid layer and to form the oil film on the surface of the substrate.

It is preferable in the oil film formation method that:
(1) the substrate including the water-soluble organic material solid layer provided on the surface is shaped into a container, the shaped container is filled with a hydrous content corresponding to the hydrous substance so as to form the oil film by a contact between the water-soluble organic material solid layer and the hydrous substance;
(2) the water-soluble organic material solid layer is provided on the surface of the substrate before shaping the substrate to a container; and
(3) the container is a bag.

### Effects of the invention:

The structure of the present invention has a water-soluble organic material solid layer that includes an oil or fat and that is provided on a surface of the substrate having a predetermined shape. Therefore, the oil film may not set off even if the structure is stacked.

In the structure, the water-soluble organic material solid layer has an oil film formability. As a result, the oil film can be formed with an extremely simple manner of bringing the hydrous substance into contact with the water-soluble organic material solid layer. Namely, the water-soluble organic material brought into contact with the hydrous substance dissolves, and the layer of the water-soluble organic material disappears. At that time, the oil or fat included therein is eluted to form the oil film.

Therefore, a film is used most preferably for the substrate of the structure according to the present invention. The water-soluble organic material solid layer is formed on the surface of the film, and then, the film formed with the water-soluble organic material solid layer is wound into a roll. At this time, the oil film may not substantially set of f. After that, the film is wound out from the roll and cut into appropriate size of pieces, shaped into a bag by heat sealing or the like and then filled with a hydrous content. In this manner, the structure can be used as a container filled with the hydrous content.

As mentioned above, the structure of the present invention is capable of effectively avoiding the problem of offset of the oil film after formation. Therefore, it can be produced industrially as a product with an improved lubricity with respect to the hydrous substance.

### Brief Description of the Drawings:

[Fig. 1]: a schematic cross sectional view showing a surface configuration of the structure of the present invention; and
[Fig. 2]: an explanatory view for explaining a method for forming an oil film on a surface of a structure of the present invention.

### Mode for Carrying out the Invention:

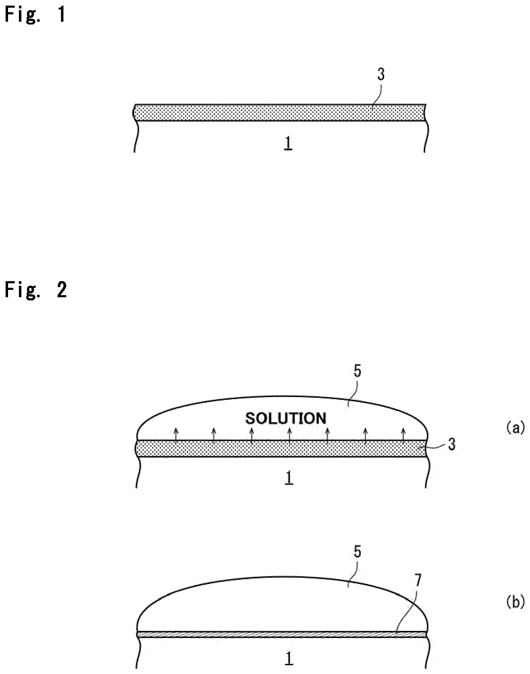

The structure of the present invention as shown in Fig. 1 comprises a substrate 1 shaped in accordance with the application, and a water-soluble organic material solid layer 3 formed on the surface. This water-soluble organic material solid layer 3 includes an oil or fat. The layer 3 has a capability of forming an oil film after being brought into contact with a hydrous substance. The lubricity with regard to various hydrous substances may be improved by the oil film to be formed. For instance, a viscous paste content can flow quickly without adhesion onto the surface of the structure.

Fig. 2 is a view to explain the method for forming the oil film from the water-soluble organic material solid layer 3. The water-soluble organic material solid layer 3 as shown in Fig. 1 comprises a solid water-soluble organic material and it includes an oil or fat.

Specifically, when the water-soluble organic material solid layer 3 is brought into contact with the hydrous substance 5, the water-soluble organic material forming the powder dissolves (see Fig. 2 (a)). As a result, the oil or fat is eluted from the solid layer 3 so as to form an oil film 7 on the surface of the substrate 1, and thus, the hydrous substance 5 may be present on the oil film 7. Therefore, the hydrous substance 5 may flow quickly on the surface due to the lubricating action imparted by the oil film 7.

In the present invention, the water-soluble organic material is not limited in particular as long as it is water-soluble and it remains solid during the processes for producing and storing the structure. Similarly, the way for including the oil or fat is not limited in particular but various embodiments can be applied depending on the characteristics of the water-soluble material in use.

For instance, when the water-soluble organic material is oil-absorptive polysaccharides like dextrin or hyaluronic acid or clathrates such as cyclodextrin, the oil or fat can be included by oil absorption or clathration.

Even the polysaccharides not exhibiting oil absorption, such as starch and sodium alginate, cellulose-based polymers such as methylcellulose and carboxycellulose, or polyvinyl alcohol, can include oil or fat when they are mixed with a small amount of oil or fat and pulverized to form microcapsules.

Cellulose-based polymers, polysaccharides, cyclodextrin and the like may be used particularly preferably for the water-soluble organic material in a case of using the structure for foods or medical products, from the viewpoint of safety to the human body, for instance.

There is no particular limitation on the oil and fat to be included in the water-soluble organic material solid layer 3. However, from the viewpoint of enhancing the slide property with respect to the viscous hydrous substance, an oil or fat having a surface tension in a range of 10 to 40 mN/m, particularly 16 to 35 mN/m, is preferred.

Representative examples of the oil or fat having the surface tension include vegetable oils such as fatty acid triglyceride. In particular, edible oils may be used preferably when the substance to have the slide property is food (e.g., mayonnaise or ketchup).

Specific examples of the edible oil include soybean oil, rapeseed oil, olive oil, rice oil, corn oil, safflower oil, sesame oil, palm oil, castor oil, avocado oil, coconut oil, almond oil, walnut oil, hazelnut oil, and salad oil.

The amount of the oil or fat to be carried by the water-soluble organic material solid layer 3 may be determined depending on the embodiment of the water-soluble organic material in order to prevent the oil or fat from bleeding on the surface of the solid layer 3. For instance, in a case of using an oil-absorptive water-soluble organic material (like polysaccharides such as dextrin and hyaluronic acid), the amount of the oil or fat to be absorbed and carried may be about 0.05 to 50 parts by mass per 100 parts by mass of the water-soluble organic material. In a case of using a clathrate like cyclodextrin, the amount of the oil or fat to be absorbed and carried may be about 0.05 to 20 parts by mass per 100 parts by mass of the water-soluble organic material. And in a case of using another type of water-soluble organic material to carry the oil or fat in the form of microcapsule, the amount of the oil or fat to be used can be set to a range of about 20 to 100 parts by mass per 100 parts by mass of the water-soluble organic material.

The thickness of the water-soluble organic material solid layer 3 can be set so that the oil or fat eluted from the solid layer 3 can get a sufficient contact with the hydrous substance 5 and exhibit favorable lubricity. For instance, the thickness of the solid layer 3 may be set so that the amount of the oil or fat will be 0.5 g/m² or more, and in particular, in a range of 2.5 to 10 g/m².

The water-soluble organic material solid layer 3 may be provided as a powder or as a continuous layer as long as it does not drop off from the surface of the substrate 1 during transportation.

The substrate 1 makes the base for the aforementioned water-soluble organic material solid layer 3. In the present invention, the material for the substrate 1 is not limited particularly as long as the substrate 1 can hold the solid layer 3 on its surface in order to prevent the solid layer 3 from dropping. The substrate 1 can be made of any suitable material such as a resin, glass and a metal depending on the application.

For instance, the material may be roughened by blasting or the like, and the water-soluble organic material solid layer 3 may be formed on the thus roughened surface, thereby making it possible to stably hold the solid layer 3.

In the structure of the present invention, the oil film formed by the water-soluble organic material solid layer 3 exhibits an excellent lubricity with respect to the viscous hydrous substance. Taking this into consideration, the substrate 1 is preferably formed as a pipe to flow the hydrous substance, a container for containing the same, or a container lid. The water-soluble organic material solid layer 3 is formed on a surface of the substrate 1 to get contact with the hydrous substance. Since the oil film is not formed yet on the structure at this stage, the oil film may not set off even when the structure is held in a stacked or lapped state. Therefore, the substrate 1 is the most preferable when it is formed to be a film from the viewpoint of maximizing the advantage of the present invention.

It is most preferable that the surface of the substrate 1 (i.e., the underlying surface of the water-soluble organic material solid layer 3) is made of a synthetic resin so that the oil film finally formed of the water-soluble organic material solid layer 3 can be held without mixing with the hydrous substance with which the oil film will get contact.

The synthetic resin (hereinafter, this is called base resin) may be either a thermoplastic resin or a thermosetting resin, and it is formable. In most cases, preferably it is a thermoplastic resin since it can be formed easily to a film or the like and it can be formed easily to a bag by heat sealing.

Examples of the thermoplastic resin are as follows:
olefin resins such as random or block copolymer of α-olefins like low-density polyethylene, high-density polyethylene, polypropylene, poly1-butene, poly4-methyl-1-pentene or ethylene, propylene, 1-butene and 4-methyl-1-pentene, and cyclic olefin copolymer;
ethylene·vinyl copolymers such as ethylene·vinyl acetate copolymer, ethylene·vinyl alcohol copolymer, and ethylene· vinyl chloride copolymer;
styrene-based resins such as polystyrene, acrylonitrile· styrene copolymer, ABS, and α-methylstyrene·styrene copolymer;
vinyl-based resins such as polyvinyl chloride, polyvinylidene chloride, vinyl chloride·vinylidene chloride copolymer, methyl polyacrylate, and methyl polymethacrylate;
polyamide resins such as nylon 6, nylon 6-6, nylon 6-10, nylon 11, and nylon 12;
polyester resins such as polyethylene terephthalate (PET), polybutylene terephthalate, polyethylene naphthalate, and copolyesters thereof;
polycarbonate resin;
polyphenylene oxide resin; and
biodegradable resins such as polylactic acid.

Alternatively, a blend of any of these thermoplastic resins can be used as the underlying resin as long as the formability is not degraded.

Among the thermoplastic resins, the olefin resins and the polyester resins used as the material for a bag to contain a viscous content can be used preferably in the present invention, and the olefin resins are most preferred.

The substrate 1 may have a monolayer structure of the above-described thermoplastic resin, or it may be a laminate of the thermoplastic resin and paper. Alternatively, it may have a multilayered structure as a combination of a plurality of thermoplastic resins, or a laminate formed by coating the thermoplastic resin on the surface of a metal foil or the like.

For forming the water-soluble organic material solid layer 3 on the surface of the substrate 1, it is possible to form a powdery or particulate solid layer 3 by electrostatic spray or the like in accordance with the embodiment of the solid layer 3. Alternatively, it is possible to form the water-soluble organic material solid layer 3 by mixing a volatile organic solvent like ethanol and a water-soluble organic material including an oil or fat, thereby preparing a coating solution which is applied onto the surface of the substrate 1, and then heating and drying to remove the organic solvent.

In the structure of the present invention obtained by forming the water-soluble organic material solid layer 3 on the surface of the substrate 1, the water-soluble organic material solid layer 3 includes an oil or fat. The structure can be held in a stacked state since no oil film is formed on its surface. For instance, when the substrate 1 is provided as a long film and wound to be stored as a roll, the oil film never sets off.

As mentioned above, in the structure of the present invention, the water-soluble organic material solid layer 3 is brought into contact with a hydrous substance before use, so that the oil film is formed to exhibit lubricity with respect to the hydrous substance.

In particular, when the long film is used as the substrate 1, the long film having on the surface the water-soluble organic material solid layer 3 is wound out from the roll, cut to an appropriate size and heat-sealed to make a pouch. The pouch is filled with a content of a hydrous substance, and sealed. The sealed pouch is provided as a product.

The content is preferably a hydrous substance having a viscosity of 100 mPa·s or more at 25°C, and the examples include mayonnaise, ketchup, aqueous paste, honey, sauces, mustard, dressing, jam, chocolate syrup, cosmetic solutions such as milky lotion, liquid detergent, shampoo, a rinse, gels such as pudding and yoghurt, curry sauce, and slurry food.

For instance, water-soluble organic material solid layers 3 including various oils or fats in various water-soluble organic materials were formed on surfaces of polypropylene films, which were then wound onto rolls. It was confirmed through experiments that offset of oil films did not occur.

A pouch was produced with this film, and filled therein with a curry sauce and left stand for about 1 hour. It was confirmed that the water-soluble organic materials were dissolved and oil films were formed.

### Examples:

### <Examples 1-4, Comparative Example 1>

An inner polypropylene film of 100 mm × 100 mm was stuck on a plate, on which a powder as a mixture of 100 parts by mass of dextrin (dextrin hydrate manufactured by Junsei Chemical Co. , Ltd.) and 30 parts by mass of medium chain fatty acid (COCONARD MT manufactured by Kao Corporation) was dispersed. Further 10 g of tomato ketchup was applied thereon to have an even thickness. The plate was allowed to stand at an angle of 90° with regard to a workbench, and left for 1 minute. Then, the plate was placed horizontally to measure the amount of the tomato ketchup residing on the film, thereby calculating the amount of tomato ketchup that slid down from the film. The result is shown in Table 1.

**[Table 1]**

| | Example 1 | Example 2 | Example 3 | Example 4 | Comparative Example 1 |
|---|---|---|---|---|---|
| *1 (g/m²) | 0.1 | 0.5 | 2.5 | 10 | - |
| Slide-down amount (g) | 0.51 | 1.26 | 2.41 | 2.42 | 0.45 |

| | | | | | |
|---|---|---|---|---|---|
| *1: Spray amount of oil-containing dextrin powder | | | | | |

### Explanations of Letters or Numerals:

- 1:: substrate
- 3:: water-soluble organic material solid layer
- 5:: hydrous substance
- 7:: oil film

## Claims

1. A structure including a water-soluble organic material solid layer that includes an oil or a fat and that is provided on a surface of a substrate.

2. The structure according to claim 1, wherein the substrate includes a film.

3. The structure according to claim 1, wherein the water-soluble organic material is selected from a cellulose polymer, polysaccharide, dextrin and cyclodextrin, and the oil is an edible oil.

4. An oil film formation method including: bringing a hydrous substance into contact with the water-soluble organic material solid layer on the surface of the structure according to claim 1 to elute the oil or fat from the water-soluble organic material solid layer and to form the oil film on the surface of the substrate.

5. The oil film formation method according to claim 4, wherein the substrate including the water-soluble organic material solid layer provided on the surface is shaped into a container, the container is filled with a hydrous content corresponding to the hydrous substance so as to form the oil film by a contact between the water-soluble organic material solid layer and the hydrous substance.

6. The oil film formation method according to claim 5, wherein the water-soluble organic material solid layer is provided on the surface of the substrate before shaping the substrate into a container.

7. The oil film formation method according to claim 5, wherein the container is a bag.
